# EUROPEAN PATENT APPLICATION

(11) **EP 4 776 757 A1**
(43) Date of publication of application: **15.07.2026**
(21) Application number: 25162026.6
(22) Date of filing: 06.03.2025
(51) Int. Cl.: H05B 45/18, H05B 45/345, H05B 45/395, H05B 45/50, H05B 45/56, H05B 47/155, H05B 47/21, H05B 45/12, H05B 45/22

(54) **MULTI-CHANNEL LIGHT-EMITTING DIODE CONSTANT-CURRENT-AND-LIGHT POWER DRIVING CIRCUIT AND ELECTRONIC DEVICE**

(30) Priority: 08.01.2025 CN 202510028102
(71) Applicant: Guangzhou Supu Software Technology Co., Ltd., Guangzhou, Guangdong 510000 (CN)
(72) Inventor: LIN, Chuangye, GUANGZHOU, GUANGDONG, 510000 (CN)
(74) Representative: Araujo, Daniel

(57) **Abstract**

A multi-channel light-emitting diode constant-current-and-light power driving circuit and an electronic device are provided. The circuit includes a power supply unit, a light-emitting unit, a power transistor unit and a control uni. The power supply unit is connected to the light-emitting unit and configured to transmit a voltage signal to the light-emitting unit. The power transistor unit is connected to the light-emitting unit and configured to adjust the current of the light-emitting unit to control the light-emitting unit to be in a constant current state. The control unit is connected to the power supply unit and the power transistor unit, respectively, and configured to monitor the power transistor unit, and adjust the voltage signal through the power supply unit according to a monitored signal to control a voltage value of the power transistor unit to be within a first target value range.

## Description

### TECHNICAL FIELD

The present disclosure relates to the technical field of optoelectronic semiconductors, and specifically, to a multi-channel light-emitting diode constant-current-and-light power driving circuit and an electronic device.

### BACKGROUND

In related fields, the core of a light-emitting diode (LED) linear constant current driving circuit is a power transistor. In a constant current state, the power transistor works in a linear region. When an external power supply voltage rises, a voltage drop of the power transistor also rises accordingly. When the external power supply voltage drops, the voltage drop across the power transistor also drops accordingly, thereby maintaining a constant voltage on LED lamp beads, and ultimately achieving the purpose of the constant current drive for the LED lamp beads. However, when an input voltage increases, the current of LED lamp beads decreases, or the temperature of LED lamp beads increases, the voltage drop of the power transistor increases, further increasing the power consumption and temperature of the power transistor. The temperature of the power transistor continues to rise due to heat accumulation, thereby causing damage to the power transistor.

### SUMMARY

The present disclosure provides a multi-channel light-emitting diode constant-current-and-light power driving circuit and an electronic device, which can keep a light-emitting diode in a constant current state while protecting a power transistor.

The present disclosure provides a multi-channel light-emitting diode constant-current-and-light power driving circuit, where the circuit includes a power supply unit, a light-emitting unit, a power transistor unit and a control unit;
the power supply unit is connected to the light-emitting unit and configured to transmit a voltage signal to the light-emitting unit;
the power transistor unit is connected to the light-emitting unit and configured to adjust the current of the light-emitting unit to control the light-emitting unit to be in a constant current state; and
the control unit is connected to the power supply unit and the power transistor unit respectively, and configured to monitor the power transistor unit to obtain a signal, and adjust the voltage signal through the power supply unit according to the monitored signal to control a voltage value of the power transistor unit to be within a voltage adjustment based target value range.

In an embodiment, the control unit is further configured to control the power supply unit to stop outputting the voltage signal, control the power transistor unit to be in a cut-off current state, and issue an alarm notification that the power transistor unit is abnormal when detecting that the voltage value of the power transistor unit is within a voltage abnormal value range.

In an embodiment, the circuit further includes a temperature sensor unit;
the temperature sensor unit is connected to the control unit and used to collect and transmit a temperature value of the light-emitting unit to the control unit;
the control unit is configured to adjust the voltage signal through the power supply unit based on a power transistor voltage drop value detected from the power transistor unit and the temperature value to control the voltage value of the power transistor unit to be in a temperature adjustment based target value range; and
the control unit is further configured to control the power supply unit to stop outputting the voltage signal, control the power transistor unit to be in the cut-off current state, and issue an alarm notification that the light-emitting unit has the abnormal temperature when detecting that the temperature value of the light-emitting unit is within a temperature abnormal value range.

In an embodiment, the control unit is further configured to save and use a power transistor voltage difference value monitored from the power transistor unit as a historical voltage difference value; and
the control unit is further configured to determine a difference value between a current power transistor voltage difference value and the historical voltage difference value, and issue an alarm notification when the difference value is greater than a preset difference value.

In an embodiment, the circuit further includes a UV light sensor unit;
the UV light sensor unit is connected to the control unit and configured to collect and transmit an UV light power signal of the light-emitting unit to the control unit;
the control unit is configured to compare the UV light power signal with a preset UV light power given signal to obtain an UV light power error value, and send adjustment signals to the power transistor unit and the power supply unit respectively according to the UV light power error value to control an UV light power value of the light-emitting unit to be equal to a preset threshold;
the power transistor unit is configured to adjust the current of the light-emitting unit when the adjustment signal is obtained; and
the power supply unit is configured to adjust the voltage signal transmitted to the light-emitting unit when the adjustment signal is obtained.

In an embodiment, the circuit includes a plurality of the light-emitting units and a plurality of the power transistor units, the light-emitting unit is one of the plurality of light-emitting units, the power transistor unit is one of the plurality of power transistor units, and each of the light-emitting units is connected to a respective one of the power transistor units to constitute a plurality of integrated light-emitting units;
the power supply unit is connected to the light-emitting unit in each of the integrated light-emitting units, respectively, and configured to transmit a same parallel voltage signal to each of the integrated light-emitting units; and
the control unit is connected to the power transistor unit in each of the integrated light-emitting units, respectively, and configured to adjust the parallel voltage signal through the power supply unit according to a signal monitored from a target integrated light-emitting unit of the plurality of integrated light-emitting units to control the voltage value of the power transistor unit in each of the integrated light-emitting units to be within a target value range for the plurality of integrated light-emitting units, wherein the target value range for the plurality of integrated light-emitting units is determined based on an integrated light-emitting unit with the lowest voltage value among the plurality of integrated light-emitting units in response to lowering the parallel voltage signal and the target value range for the plurality of integrated light-emitting units is determined based on an integrated light-emitting unit with the highest voltage value among the plurality of integrated light-emitting units in response to increasing the parallel voltage signal.

In an embodiment, the circuit further includes a plurality of UV light sensor units, the UV light sensor unit is one of the plurality of UV light sensor units; and the light-emitting unit of each of the integrated light-emitting units has a corresponding relationship with a respective one of the plurality of UV light sensor units, and a plurality of target light powers are provided, each of which is for a respective one of the integrated light-emitting units;
the power supply unit includes a plurality of power switch modules, and each of the power switch modules is connected to a respective one of the integrated light-emitting units;
each of the plurality of UV light sensor units is configured to collect and transmit the UV light power signal of a target light-emitting unit according to the corresponding relationship to the control unit to determine a plurality of light powers each corresponding to a respective one of the integrated light-emitting units; and
the power supply unit is further configured to adjust the current transmitted to each of the plurality of integrated light-emitting units through the respective one of the power switch modules until the respective light power is equal to the respective target light power for each of the integrated light-emitting units.

In an embodiment, the power transistor unit includes a power transistor module and a negative feedback adjustment module;
a first end of the power transistor module is connected to the light-emitting unit, a second end of the power transistor module is connected to a second input end of the negative feedback adjustment module, and a third end of the power transistor module is connected to an output end of the negative feedback adjustment module; and
a first input end of the negative feedback adjustment module is connected to a first control signal output end of the control unit.

In an embodiment, the power transistor module includes a power transistor, a first resistor, a second resistor and a third resistor;
a first end of the power transistor is served as the first end of the power transistor module, a second end of the power transistor is served as the second end of the power transistor module, and a third end of the power transistor is served as the third end of the power transistor module;
an end of the first resistor is connected to the first end of the power transistor, and the other end of the first resistor is connected to a first sampling signal input end of the control unit;
an end of the second resistor is connected to the other end of the first resistor, and the other end of the second resistor is connected to a negative output end of the power supply unit; and
an end of the third resistor is connected to the second end of the power transistor, and the other end of the third resistor is connected to the negative output end of the power supply unit.

In an embodiment, a sampling signal output end of the power supply unit is connected to a second sampling signal input end of the control unit, and a control signal input end of the power supply unit is connected to a second control signal output end of the control unit; and
the control unit is configured to obtain a power supply sampling signal through the second sampling signal input end of the control unit, then generate a power supply control signal according to the power supply sampling signal, and transmit the power supply control signal to the power supply unit through the second control signal output end of the control unit.

The present disclosure further provides an electronic device, including the multi-channel light-emitting diode constant-current-and-light power driving circuit as described in any one of the above.

The present disclosure has at least the following beneficial effects.

In the technical scheme of the present disclosure, the control unit monitors a working state of the power transistor unit to obtain a signal and adjusts the voltage signal output by the power supply unit according to the monitored signal. In this way, regardless of the external power supply voltage rises or falls, the control unit can keep the voltage value of the power transistor or the power transistor in the power transistor unit within the first target value range by adjusting the voltage signal to avoid the voltage difference of the power transistor or the power transistor being too large. Therefore, the technical scheme of the present disclosure can effectively prevent the power transistor or the power transistor from damaging due to the excessive voltage difference while keeping the constant current state for LED lamp beads in the light-emitting units, thereby improving stability and lifetime of the circuit.

### BRIEF DESCRIPTION OF DRAWINGS

The drawings are used to provide a further understanding of the technical scheme of the present disclosure, and constitute a part of the description. Together with the embodiments of the present disclosure, they are used to explain the technical scheme of the present disclosure, and do not constitute a limitation of the technical scheme of the present disclosure.
FIG. 1 is a schematic structural diagram of a multi-channel light-emitting diode constant-current-and-light power driving circuit according to an embodiment;
FIG. 2 is another structural schematic diagram of a multi-channel light-emitting diode constant-current-and-light power driving circuit according to an embodiment;
FIG. 3 is further another structural schematic diagram of a multi-channel light-emitting diode constant-current-and-light power driving circuit according to an embodiment;
FIG. 4 is yet another structural schematic diagram of a multi-channel light-emitting diode constant-current-and-light power driving circuit according to an embodiment;
FIG. 5 is a flow chart of internal program implementation of a control unit in a multi-channel light-emitting diode constant-current-and-light power driving circuit according to an embodiment; and
FIG. 6 is a circuit diagram of a multi-channel light-emitting diode constant-current-and-light power driving circuit according to an embodiment.

### DETAILED DESCRIPTION

In order to make the objectives, technical schemes and advantages of the present disclosure clear, the present disclosure will be further described in detail below with reference to the accompanying drawings and embodiments. It should be understood that the specific embodiments described here are only used to explain the present disclosure and are not intended to limit the present disclosure.

In related technical fields, a common light-emitting diode (LED) driving circuit uses a constant current source and a current feedback control circuit to achieve stable current driving of the LED. The core of the constant current source is a power transistor. In a constant current state, a power transistor works in a linear region and acts like a resistor. When an external power supply voltage rises (decreases), a voltage drop across the power transistor also rises (decreases) accordingly. This keeps the voltage on LED lamp beads constant, ultimately achieving the purpose of the constant current driving for the LED lamp beads.

A current feedback control circuit usually includes LED current setting, LED current sampling feedback, and an error amplifier, and usually uses a negative feedback control method. When the current in the LED increases (decreases) due to some reasons, the increased (decreased) current acts on a reverse input end of the error amplifier through a current sampling resistor.

The negative feedback structure will reduce (increase) a gate voltage of the power transistor.

Finally, the LED lamp bead current is stabilized at a given value, thereby achieving dynamic balance and achieving constant current.

The researchers of the present disclosure have found that the input voltage of common linear constant current sources is basically fixed. The input voltage is equal to the sum of the voltage of an LED string and the voltage of the power transistor. In order to achieve the constant current of the LED lamp beads, when the input voltage increases, the LED lamp bead current setting decreases and the LED lamp bead temperature increases, the voltage difference on the power transistor will increase, further causing the power transistor power consumption to increase and the temperature to rise. When the temperature continues to rise due to poor heat dissipation, the lifetime of the power transistor will be affected or the same is even burned. Since the input voltage of the linear constant current source is fixed, the input voltage cannot be adjusted online, and the efficiency of the circuit is relatively low.

In addition, with long-term use of the LED lamp beads, the lamp beads may gradually age, die or fail. When some LED lamp beads in the light string fail due to a short circuit, in order to achieve constant current control of the remaining LED light strings, the voltage drop of the failed LED lamp beads due to the short circuit is applied onto Mos. As the use time goes by, the number of failed LEDs increases, causing the voltage difference on the power transistor to continue to increase, and the heat of the power transistor continues to accumulate, which may eventually cause damage of the power transistor and burning of the LED lamp beads. When some LED lamp beads fail due to short circuit or the LED lamp string is short-circuited due to external reasons, since the voltage difference on the power transistor cannot be detected, circuit protection and external alarm output functions cannot be realized.

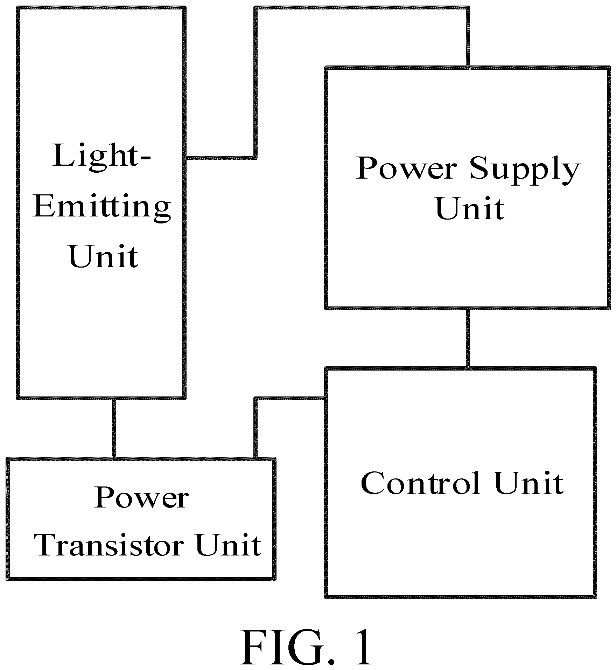

Referring to FIG. 1, FIG. 1 is a schematic structural diagram of a multi-channel light-emitting diode constant-current-and-light power driving circuit according to an embodiment.

This embodiment provides a multi-channel light-emitting diode constant-current-and-light power driving circuit, which includes a power supply unit, a light-emitting unit, a power transistor unit and a control unit.

The power supply unit is connected to the light-emitting unit and configured to transmit a voltage signal to the light-emitting unit.

The power transistor unit is connected to the light-emitting unit and configured to adjust the current of the light-emitting unit to control the light-emitting unit to be in a constant current state.

The control unit is connected to the power supply unit and the power transistor unit respectively, and configured to monitor the power transistor unit, and adjust the voltage signal through the power supply unit according to a monitored signal to control a voltage value of the power transistor unit to be within a first target value range.

In some embodiments, the control unit is further configured to control the power supply unit to stop outputting the voltage signal, control the power transistor unit to be in a cut-off current state, and issue an alarm notification that the power transistor unit is abnormal when detecting that the voltage value of the power transistor unit is within a first abnormal value range. Here, the first abnormal value range is predefined by the users. The detected voltage value is within the first abnormal value range, indicating that the pressure difference across the power transistor is too large.

It can be understood that in the technical scheme of the present disclosure, the control unit monitors the working state of the power transistor unit and adjusts the voltage signal output by the power supply unit according to the monitored signal. In this way, even if the external power supply voltage rises or falls, the control unit can keep the voltage value of the power transistor in the power transistor unit within the first target value range by adjusting the voltage signal to avoid the voltage difference of the power transistor being too large. Specifically, when the input voltage increases or the current of LED lamp beads in the light-emitting unit decreases, the control unit detects that the voltage difference of the power transistor increases and thus reduces the voltage signal through the power supply unit to reduce the voltage difference and power consumption of the power transistor, thereby preventing temperature from rising. On the contrary, when the input voltage drops or the current of LED lamp beads in the light-emitting unit increases, the control unit increases the voltage signal to keep the voltage difference and power consumption of the power transistor within a reasonable range.

It can be seen that the technical scheme of the present disclosure can effectively prevent the power transistor from damaging due to excessive voltage difference while keeping the constant current state for the LED lamp beads in the light-emitting unit, thereby improving stability and lifetime of the circuit.

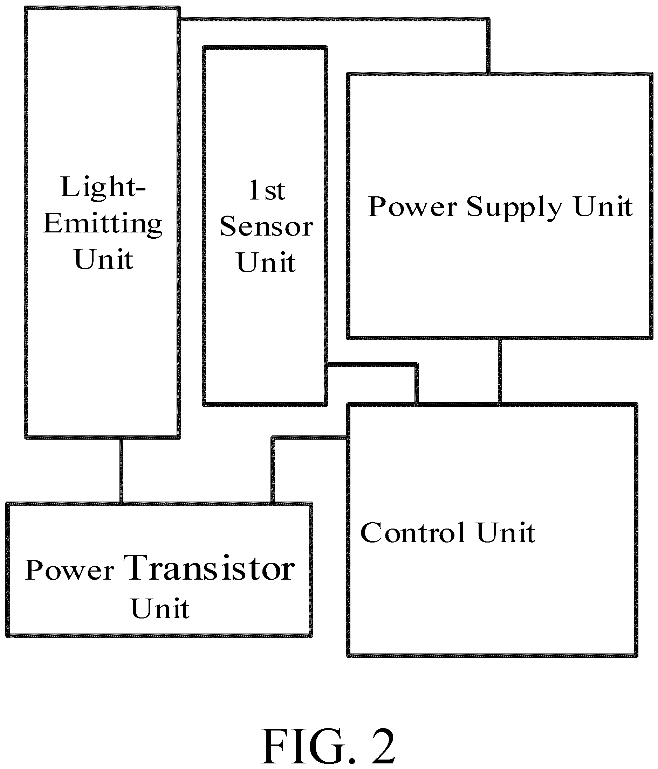

Referring to FIG. 2, FIG. 2 is another structural schematic diagram of a multi-channel light-emitting diode constant-current-and-light power driving circuit according to an embodiment.

In some embodiments, the multi-channel light-emitting diode constant-current-and-light power driving circuit further includes a first sensor unit.

The first sensor unit is connected to the control unit and configured to collect and transmit a temperature value of the light-emitting unit to the control unit.

The control unit is configured to adjust the voltage signal through the power supply unit based on a power transistor voltage drop value and the temperature value detected from the power transistor unit to control the voltage value of the power transistor unit to be in a second target value range.

In some embodiments, the control unit is further configured to control the power supply unit to stop outputting the voltage signal, control the power transistor unit to be in the cut-off current state, and issue an alarm notification that the light-emitting unit has the abnormal temperature when detecting that the temperature value of the light-emitting unit is within a second abnormal value range. Here, the second abnormal value range is predefined by the users. The detected temperature value is within the second abnormal value range, indicating that the temperature of the light-emitting unit is too high.

It can be understood that this embodiment realizes constant-current-and-light power driving of multiple light-emitting diodes (LEDs) by integrating the control unit, the power transistor unit and the first sensor unit. The control unit monitors the power transistor voltage drop and LED temperature, and dynamically adjusts the voltage signal output by the power supply unit to keep the power transistor voltage within the target range and ensure constant LED current and stable light power. The introduction of the temperature sensor enables the system to monitor the LED temperature in real time. When an abnormally high temperature is detected, the control unit will cut off the power supply and issue an alarm to protect the LED from thermal damage and improve the safety and reliability of the system.

In some embodiments, the control unit is further configured to save and use a power transistor voltage difference value monitored from the power transistor unit as a historical voltage difference value.

The control unit is further configured to determine a difference value between a current power transistor voltage difference value and the historical voltage difference value, and issue an alarm notification when the determined difference value is greater than a preset difference value.

It can be understood that in the light-emitting unit, any change in current will lead to a corresponding change in the voltage difference value of the power transistor. For example, if the light-emitting diodes in the light-emitting unit are damaged or the number increases, the current will change. In order to keep the current of the light-emitting unit constant, the power transistor voltage difference value of the power transistor unit must be adjusted accordingly.

In this embodiment, every time the voltage difference value of the power transistor changes, the changed voltage difference value will be saved as the historical voltage difference value.

Specifically, the control unit will save an initial power transistor voltage difference value when each light-emitting diode in the light-emitting unit is operating normally as the initial historical voltage difference value. Subsequently, the control unit will monitor and record the power transistor voltage difference value in the current state, and compare the same with the initial historical voltage difference value to calculate the difference value.

In a specific embodiment, by comparing the current power transistor voltage difference value with the initial historical voltage difference value, the number of normally operating light-emitting diodes in the light-emitting unit under the current state can be estimated. If the calculated difference value exceeds a preset threshold, the control unit issues an alarm notification. This shows that the number of abnormally working light-emitting diodes in the light-emitting unit under the current state has exceeded expectations, prompting that the light-emitting unit needs to be repaired.

In some embodiments, the circuit includes a plurality of the light-emitting units and a plurality of the power transistor units; and each of the light-emitting units is connected to a respective one of the power transistor units to constitute a plurality of integrated light-emitting units.

The power supply unit is connected to the light-emitting unit in each of the integrated light-emitting units respectively, and transmits a same parallel voltage signal to each of the integrated light-emitting units.

The control unit is connected to the power transistor unit in each of the integrated light-emitting units respectively, and configured to adjust the parallel voltage signal through the power supply unit according to a signal monitored from a target integrated light-emitting unit in the plurality of integrated light-emitting units to control the voltage value of the power transistor unit in each of the integrated light-emitting units to be within a third target value range.

It can be understood that in this embodiment, the power supply unit is responsible for connecting a plurality of integrated light-emitting units. Each integrated light-emitting unit contains a power transistor unit and a light-emitting unit. The voltage signal output by the power supply unit can affect the voltage of all integrated light-emitting units at the same time, thereby affecting the voltage of each power transistor unit and light-emitting unit.

When adjusting the voltage signal output by the power supply unit, specific voltage requirements of the target integrated lighting unit must be taken into account. For example, when the power supply unit needs to transmit voltage signals to the plurality of integrated light-emitting units, if the goal is to reduce the voltage signal, the integrated light-emitting unit with the lowest voltage should be selected as an adjustment target, and reference should be made to the lowest normal operating voltage of the power transistor voltage drop in this unit, so as to determine the target value range of the reduced voltage signal. Then, according to this target value range, the voltage signal output by the power supply unit is appropriately reduced. It should be noted that if the voltage signal output by the power supply unit decreases too much, the power transistor in the integrated light-emitting unit with the lowest voltage may not work properly.

Similarly, when it is necessary to increase the voltage signal output by the power supply unit, the integrated light-emitting unit with the highest voltage should be selected as the adjustment target, and reference should be made to the voltage drop of the power transistor in this unit so as to determine the target value for adjusting the voltage signal output by the power supply unit. In this way, it can be ensured that the power transistor units and light-emitting units in all the integrated light-emitting units can operate normally at appropriate voltages.

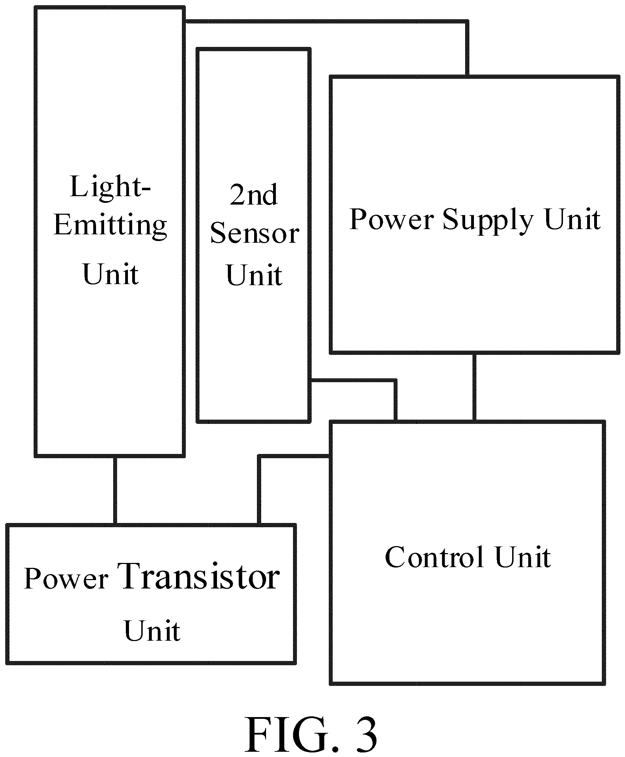

Referring to FIG. 3, FIG. 3 is further another structural schematic diagram of a multi-channel light-emitting diode constant-current-and-light power driving circuit according to an embodiment.

In some embodiments, the multi-channel light-emitting diode constant-current-and-light power driving circuit further includes a second sensor unit.

The second sensor unit is connected to the control unit and configured to collect and transmit an UV light power signal of the light-emitting unit to the control unit.

The control unit is configured to compare the UV light power signal with a preset UV light power given signal to obtain an UV light power error value, and send adjustment signals to the power transistor unit and the power supply unit respectively according to the UV light power error value to control an UV light power value of the light-emitting unit to be equal to a preset threshold.

The power transistor unit is configured to adjust the current of the light-emitting unit when the adjustment signal is obtained.

The power supply unit is configured to adjust the voltage signal transmitted to the light-emitting unit when the adjustment signal is obtained.

In some embodiments, the control unit has two working modes: first mode and second mode. In these two modes, the working state of the sensor unit will be different. In the first mode, the control unit adjusts the output voltage through the power supply unit according to the voltage difference value of the power transistor. The control unit also detects the UV light power signal through the second sensor unit. Once the UV light power signal is detected, the control unit will automatically switch to a constant power mode, which is the second mode. In the constant power mode, the control unit detects the light signal of each light-emitting unit. After the detection is completed, the control unit will adjust the current by controlling the power transistor unit of a certain channel of light-emitting units. By adjusting the current, the control unit can adjust the light power of the channel of light-emitting unit, thereby changing the light signal.

The control unit achieves precise control of the light power of the light-emitting unit by switching between the two modes.

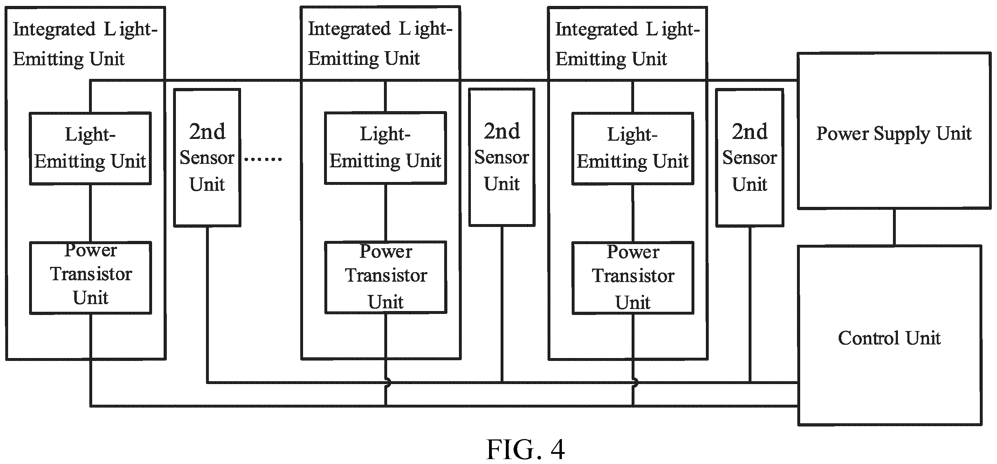

Referring to FIG. 4, FIG. 4 is yet another structural schematic diagram of a multi-channel light-emitting diode constant-current-and-light power driving circuit according to an embodiment.

Referring to FIG. 4, in some embodiments, the circuit includes a plurality of the light-emitting units and a plurality of the power transistor units; and each of the light-emitting units is connected to a respective one of the power transistor units to constitute a plurality of integrated light-emitting units. The power supply unit is connected to the light-emitting unit in each of the integrated light-emitting units respectively, and transmits a same parallel voltage signal to each of the integrated light-emitting units. Each integrated lighting unit is matched with a second sensor unit.

The circuit also includes a plurality of the second sensor units; the light-emitting unit of each of the integrated light-emitting units has a corresponding relationship with one of the second sensor units; the power supply unit includes a plurality of power switch modules, and each of the power switch modules is connected to a respective one of the integrated light-emitting units.

Each of the second sensor units is configured to collect and transmit the UV light power signal of a target light-emitting unit according to the corresponding relationship to the control unit to determine a light power corresponding to each of the integrated light-emitting units.

The power supply unit is further configured to adjust the current transmitted to each of the integrated light-emitting units through each of the switch modules respectively until the light power corresponding to each of the integrated light-emitting units is equal to a corresponding target light power.

By measuring the UV light power error value of each integrated light-emitting unit, abnormally working integrated light-emitting units can be identified. For these abnormal units, there is no need to adjust the voltage signals transmitted to all integrated light-emitting units through the power supply unit. On the contrary, the adjustment signal can be directly sent to the power transistor unit in the integrated light-emitting unit that is not working normally, and the current is adjusted through the power transistor unit to restore the normal working state of the integrated light-emitting unit.

If the second sensor unit detects that multiple integrated light-emitting units have problems at the same time, the second sensor unit can send an adjustment signal to the power supply unit, and the power supply unit adjusts the output voltage to uniformly adjust the voltage of multiple integrated light-emitting units that are not working normally to help the same restore the normal working state. For integrated light-emitting units that have not returned to normal after voltage adjustment, further targeted adjustments can be made by adjusting the current through the power transistor unit to ensure that all integrated light-emitting units can restore the normal working state.

Circuit design of this embodiment allows precise current or voltage adjustment of a single or multiple integrated light-emitting units that are not working normally to quickly and effectively restore their normal functions. Through this design, the reliability and maintenance efficiency of the circuit can be improved.

It can be understood that the power transistor unit of each integrated light-emitting unit can be switched between the working state and the cut-off state. When the power transistor unit of any integrated light-emitting unit is in a cut-off state, the circuit in which the integrated light-emitting unit is located is in an open circuit state, the current is zero, and the light-emitting unit of the integrated light-emitting unit stops working.

In some embodiments, the control unit is further configured to control the power supply unit to stop outputting the voltage signal, control the power transistor unit to be in a cut-off current state, and issue an alarm notification that the light-emitting unit has abnormal energy when detecting that the UV light power value of the light-emitting unit is within a third abnormal value range. Here, the third abnormal value range is predefined by the users. The detected UV light power value is within the third abnormal value range, indicating that the UV light power of the light-emitting unit is too high.

In this embodiment, constant-current-and-light power driving is achieved by accurately controlling the current and UV light power of multi-channel light-emitting diodes (LEDs). The voltage of the light-emitting unit is adjusted through the power transistor unit to keep the current constant. The control unit monitors the voltage drop of the power transistor and dynamically adjusts the voltage signal to ensure stable voltage of the power transistor. The second sensor unit collects the UV light power signal, and the control unit compares the same with the preset value and adjusts the voltage to match the preset light power to achieve accurate light power control. The abnormal light power detection function cuts off the power and alarms when an abnormality is detected, protecting the LED and ensuring safety. The overall stability and reliability of the system are improved, while the consistency and efficiency of LED lighting are ensured.

It can be understood that based on the above embodiments, the voltage value of the power transistor unit is monitored, the temperature value of the light-emitting unit is detected through the first sensor unit, and detecting the UV light power signal of the light-emitting unit is detected through the second sensor unit. When a short-circuit failure occurs in the LED lamp beads, by real-time monitoring of the voltage value of the power transistor unit, the temperature value of the light-emitting unit, and the changes in the UV light power signal of the light-emitting unit, the abnormality of the LED lamp beads is detected and an alarm is output in time. In severe cases, the DC bus voltage can be directly cut off to achieve self-protection.

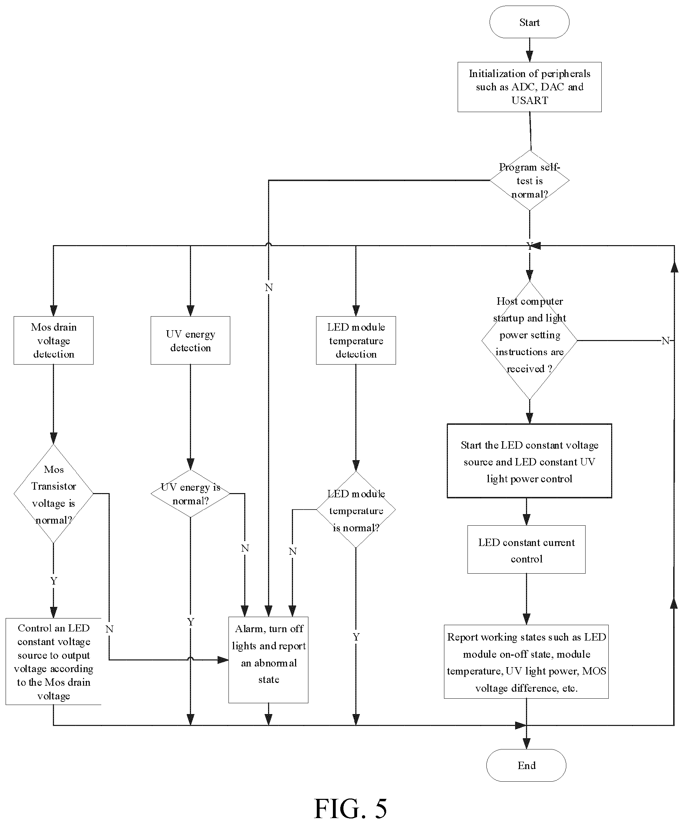

Referring to FIG. 5, FIG. 5 is a flow chart of internal program implementation of a control unit in a multi-channel light-emitting diode constant-current-and-light power driving circuit according to an embodiment.

In this embodiment, the control unit can be a central processing unit with computing capabilities such as a single chip microcomputer. After starting, the central processing unit executes a pre-existing program to implement the following steps.

First, after startup, the system goes through a "Start" node and then proceeds with "initialization of peripherals such as ADC, DAC, USART, etc." Next, through the judgment of "whether the program self-test is normal or not", if the self-test fails, the system will jump directly back to the "Start" node and re-initialize. This step ensures that the system is in a normal state before continuing.

Assuming the self-test passes, the system will continue with three parallel detection processes.

The system will check whether the voltage of the power transistor is normal. If the voltage is normal, the system will control the output voltage of an LED constant voltage source according to a drain voltage of the power transistor. If the voltage is abnormal, an alarm will be triggered, lights will be turned off, and the abnormal state will be reported.

The system will check whether UV energy of light-emitting diodes in the light-emitting unit is normal. If the UV energy is normal, the process continues; if it is abnormal, the alarm will also be triggered, the lights will be turned off, and the abnormal state will be reported.

The system will check whether the temperature of the LED module is normal. If the temperature is normal, the process continues; if it is abnormal, the alarm will be triggered, the lights will be turned off, and the abnormal state will be reported.

These three detection processes are carried out in parallel. Failure of any detection will cause the system to enter the exception handling process. If a problem occurs during any detection step, the system will alarm, turn off the lights and report an abnormal state.

If all tests pass, the system will wait for "receipt of host computer startup and light power setting instructions". Once the instruction is received, the system will start the LED constant voltage source and LED constant UV light power control, and then perform LED constant current control. This step ensures that the LED operates at a constant current to ensure the stability of the light power.

Finally, the system will report operating state information such as LED module on-off state, module temperature, UV light power, MOS voltage difference, etc. to ensure that all parameters are within the normal range, and report this information to a host computer.

It can be understood that any failure to pass the detection in this embodiment will cause the system to enter exception processing to ensure the safe and stable operation of the system.

The logic of the entire process is clear. The detection process ensures that all key parameters are within the normal range, so that the entire multi-channel light-emitting diode constant-current-and-light power driving circuit works normally.

In some embodiments, the power transistor unit includes a power transistor module and a negative feedback adjustment module.

A first end of the power transistor module is connected to the light-emitting unit, a second end of the power transistor module is connected to a second input end of the negative feedback adjustment module, and a third end of the power transistor module is connected to an output end of the negative feedback adjustment module; and a first input end of the negative feedback adjustment module is connected to a first control signal output end of the control unit.

In some embodiments, the negative feedback adjustment module is an error amplifier.

In some embodiments, the power transistor module includes a power transistor, a first resistor, a second resistor and a third resistor; a first end of the power transistor is used as the first end of the power transistor module, a second end of the power transistor is used as the second end of the power transistor module, and a third end of the power transistor is used as the third end of the power transistor module. An end of the first resistor is connected to the first end of the power transistor, and the other end of the first resistor is connected to a first sampling signal input end of the control unit. An end of the second resistor is connected to the other end of the first resistor, and the other end of the second resistor is connected to a negative output end of the power supply unit. An end of the third resistor is connected to the second end of the power transistor, and the other end of the third resistor is connected to the negative output end of the power supply unit.

In some embodiments, a sampling signal output end of the power supply unit is connected to a second sampling signal input end of the control unit, and a control signal input end of the power supply unit is connected to a second control signal output end of the control unit.

The control unit is configured to obtain a power supply sampling signal through the second sampling signal input end of the control unit, then generate a power supply control signal according to the power supply sampling signal, and transmit the power supply control signal to the power supply unit through the second control signal output end of the control unit.

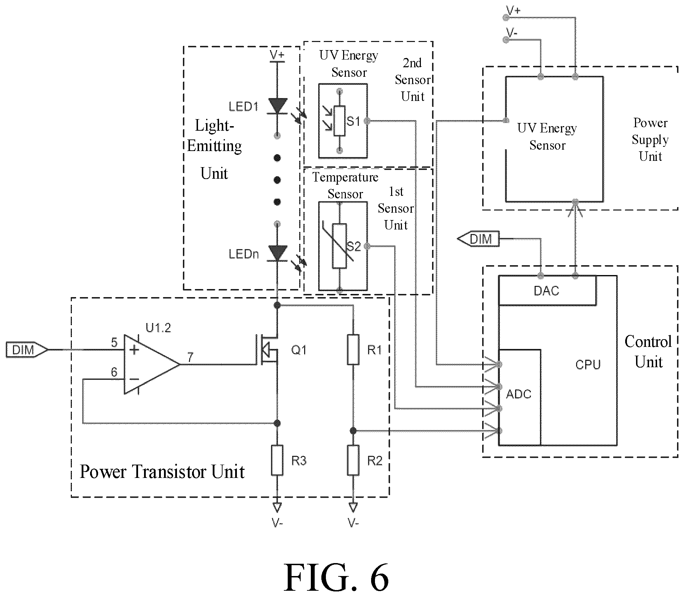

Referring to FIG. 6, FIG. 6 is a circuit diagram of a multi-channel light-emitting diode constant-current-and-light power driving circuit according to an embodiment.

In this embodiment, the lighting unit includes an LED light string; the power transistor Q1 is a Mos transistor; the first resistor R1 and the second resistor R2 are both sampling resistors for detecting Vds voltage drop of the power transistor Q1; and the third resistor R3 is a sampling resistor for LED light string current detection. The second sensor unit includes a sensor S1, and the sensor S1 is an ultraviolet light energy sensor (UV energy sensor). The first sensor unit includes a sensor S2, and the sensor S2 is a temperature sensor. The negative feedback adjustment module is an error amplifier; and the control unit is a central processing unit CPU.

A DIM signal output by the central processing unit CPU is input to a positive input end of the error amplifier, and a negative input end of the error amplifier is connected to a collector electrode of the power transistor Q1 through the third resistor R3. An output end of the error amplifier is connected to a base electrode of the power transistor Q1 through the first resistor R1 to control on and off thereof. The error amplifier compares the DIM signal with a feedback signal. According to the comparison result, the voltage output to the base electrode of transistor Q1 is adjusted, thereby controlling the degree of conduction of Q1. An emitter of the power transistor Q1 is connected to the ground (V-), and the collector electrode thereof is connected to the output end of the LED string through the second resistor R2.

The third resistor R3 is a current detection resistor of the LED light string. The current is converted into a voltage signal through the third resistor R3 and is connected to a reverse input end of the error amplifier. When DIM setting changes or the LED light string current changes due to external reasons, the negative feedback effect of current detection will keep the actual current of the LED light string at a set value.

Both output ends of sensors S1 and S2 are connected to the central processing unit CPU, and an UV energy sensor and a temperature sensor monitor environmental conditions and send analog signals to the central processing unit CPU. The central processing unit (CPU) converts the analog signals into digital signals for calculation. The central processing unit CPU adjusts the DIM signal or outputs a control signal to the LED constant voltage power supply by converting the digital signal into the analog signal.

The first resistor R1 and the second resistor R2 are both sampling resistors for voltage division for the drain voltage of the power transistor Q1, which are configured to reduce the drain voltage of the power transistor to be within an ADC range of the central processing unit CPU.

Similarly, the output voltages of the UV energy sensor, temperature sensor, and LED constant voltage source are connected to an ADC input pin of the central processing unit CPU through an analog circuit. The central processing unit CPU monitors the above analog quantities in real time. When an abnormality occurs, the CPU immediately cuts off the output of the LED constant voltage source and the output of the DIM pin. When the given current of the LED light string decreases and when the central processing unit CPU detects that the voltage at the drain of the power transistor has increased, the CPU will reduce the output voltage of the LED constant voltage source through DAC or communication to keep the voltage difference across the power transistor at a lower value to improve circuit efficiency.

When the UV light power output by the LEDs decreases due to external factors or aging of the LED lamp beads, the UV energy sensor S1 collects and transmits the real-time UV light power signal of the LED to the central processing unit CPU, and the central processing unit CPU internally transmits the UV light power error signal (i.e. a difference between the detection signal of UV light power and the UV light power given signal) is input to a PID controller of the UV light power loop in the control unit. The PID controller outputs the calculation results to the constant current PID controller, such that the current of the LED light string is increased and thus the UV light power rises until it is consistent with the given value, thereby achieving constant UV light power control.

An electronic device is provided according to an embodiment, including the multi-channel light-emitting diode constant-current-and-light power driving circuit of any of the above embodiments.

It can be understood that the contents in the above circuit embodiment are applicable to this electronic device embodiment. The functions specifically implemented by this electronic device embodiment are the same as those in the above circuit embodiment, and the beneficial effects achieved are the same as those in the above circuit embodiment.

The terms "first", "second", "third", "fourth" etc. (if present) in the description of the present disclosure and the above-mentioned drawings are used to distinguish similar objects and are not necessarily used to describe a specific order or sequence. It is to be understood that data so used are interchangeable under appropriate circumstances so that the embodiments of the present disclosure described herein, for example, can be practiced in sequences other than those illustrated or described herein. In addition, the terms "including/comprising" and "having" and any variations thereof are intended to cover non-exclusive inclusions, for example, the inclusion of a process, method, apparatus, product or device that includes a series of steps or units shall not be limited to those explicitly listed, but can include other steps or units not expressly listed or inherent to the processes, methods, products or devices. It should be understood that in the present disclosure, "at least one" refers to one or more, and "a plurality of" refers to two or more.

In the several embodiments provided in the present disclosure, it should be understood that the disclosed devices, apparatuses and methods can be implemented in other ways. For example, the device embodiments described above are only illustrative. For example, the division of the units is only a logical function division. In actual implementation, there can be other division methods. For example, multiple units or components can be combined or can be integrated into another device, or some features can be ignored, or not implemented. On the other hand, the coupling or direct coupling or communication connection between each other shown or discussed can be an indirect coupling or communication connection through some interfaces, devices or units, and can be in electrical, mechanical or other forms.

The units described as separate components can or can not be physically separated, and the components shown as units can or can not be physical units, that is, they can be located in one place, or they can be distributed to multiple network units. Some or all of the units can be selected according to actual needs to achieve the purpose of the scheme of the embodiments of the present disclosure.

In addition, each functional unit in various embodiments of the present disclosure can be integrated into one processing unit, or each unit can exist physically alone, or two or more units can be integrated into one unit. The above integrated units can be implemented in the form of hardware or software functional units.

If the integrated unit is implemented in the form of a software functional unit and sold or used as an independent product, it can be stored in a computer-readable storage medium.

Based on this understanding, the technical scheme of the present disclosure, essentially part that contributes to the existing technology, or all or part of the technical scheme can be embodied in the form of a software product, and the computer software product is stored in a storage medium, including a number of instructions for causing a computer device (which can be a personal computer, a server or a network device, etc.) to execute all or part of the steps of the circuit described in various embodiments of the present disclosure. The aforementioned storage media include: U disk, mobile hard disk, read-only memory (ROM), random access memory (RAM), magnetic disk or optical disk and other media that can store program codes.

Although the description of the present disclosure has been thorough and has particularly described several of the described embodiments, it is not intended to be limited to any such details or embodiments or to any particular embodiment, but should be regarded as providing broad possible interpretations for these claims by referring to the appended claims in view of the existing technology, thus effectively covering the intended scope of the present disclosure. In addition, the above description of the present disclosure is based on the embodiments that can be anticipated by the inventor, with the purpose of providing useful descriptions, and those immaterial changes to the present disclosure that have not been anticipated at present can still represent equivalent changes to the present disclosure.

## Claims

1. A multi-channel light-emitting diode constant-current-and-light power driving circuit, comprising a power supply unit, a light-emitting unit, a power transistor unit and a control unit, wherein
the power supply unit is connected to the light-emitting unit and configured to transmit a voltage signal to the light-emitting unit;
the power transistor unit is connected to the light-emitting unit and configured to adjust a current of the light-emitting unit to control the light-emitting unit to be in a constant current state; and
the control unit is connected to the power supply unit and the power transistor unit, respectively, and configured to monitor the power transistor unit to obtain a monitored signal, and adjust the voltage signal through the power supply unit according to the monitored signal to control a voltage value of the power transistor unit to be within a voltage adjustment based target value range.

2. The multi-channel light-emitting diode constant-current-and-light power driving circuit according to claim 1, wherein the control unit is further configured to control the power supply unit to stop outputting the voltage signal, control the power transistor unit to be in a cut-off current state, and issue an alarm notification that the power transistor unit is abnormal in response to detecting that the voltage value of the power transistor unit is within a voltage abnormal value range.

3. The multi-channel light-emitting diode constant-current-and-light power driving circuit according to claim 1, further comprising a temperature sensor unit; wherein
the temperature sensor unit is connected to the control unit and configured to collect and transmit a temperature value of the light-emitting unit to the control unit;
the control unit is configured to adjust the voltage signal through the power supply unit based on a power transistor voltage drop value detected from the power transistor unit and the temperature value to control the voltage value of the power transistor unit to be in a temperature adjustment based target value range; and
the control unit is further configured to control the power supply unit to stop outputting the voltage signal, control the power transistor unit to be in the cut-off current state, and issue an alarm notification that the light-emitting unit has the abnormal temperature in response to detecting that the temperature value of the light-emitting unit is within a temperature abnormal value range.

4. The multi-channel light-emitting diode constant-current-and-light power driving circuit according to claim 1, wherein the control unit is further configured to save and use a power transistor voltage difference value monitored from the power transistor unit as a historical voltage difference value; and
the control unit is further configured to determine a difference value between a current power transistor voltage difference value and the historical voltage difference value, and issue an alarm notification in response to the difference value being greater than a preset difference value.

5. The multi-channel light-emitting diode constant-current-and-light power driving circuit according to claim 1, further comprising a UV light sensor unit; wherein
the UV light sensor unit is connected to the control unit and configured to collect and transmit an UV light power signal of the light-emitting unit to the control unit;
the control unit is configured to compare the UV light power signal with a preset UV light power given signal to obtain an UV light power error value, and send adjustment signals to the power transistor unit and the power supply unit respectively according to the UV light power error value to control an UV light power value of the light-emitting unit to be equal to a preset threshold;
the power transistor unit is configured to adjust the current of the light-emitting unit in response to receiving the adjustment signal; and
the power supply unit is configured to adjust the voltage signal transmitted to the light-emitting unit in response to receiving the adjustment signal.

6. The multi-channel light-emitting diode constant-current-and-light power driving circuit according to claim 5, wherein the circuit comprises a plurality of light-emitting units and a plurality of power transistor units, the light-emitting unit is one of the plurality of light-emitting units, the power transistor unit is one of the plurality of power transistor units, and each of the light-emitting units is connected to a respective one of the power transistor units to constitute a plurality of integrated light-emitting units;
the power supply unit is connected to the light-emitting unit in each of the integrated light-emitting units, respectively, and configured to transmit a same parallel voltage signal to each of the integrated light-emitting units; and
the control unit is connected to the power transistor unit in each of the integrated light-emitting units, respectively, and configured to adjust the parallel voltage signal through the power supply unit according to a signal monitored from a target integrated light-emitting unit of the plurality of integrated light-emitting units to control the voltage value of the power transistor unit in each of the integrated light-emitting units to be within a target value range for the plurality of integrated light-emitting units, wherein the target value range for the plurality of integrated light-emitting units is determined based on an integrated light-emitting unit with the lowest voltage value among the plurality of integrated light-emitting units in response to lowering the parallel voltage signal and the target value range for the plurality of integrated light-emitting units is determined based on an integrated light-emitting unit with the highest voltage value among the plurality of integrated light-emitting units in response to increasing the parallel voltage signal.

7. The multi-channel light-emitting diode constant-current-and-light power driving circuit according to claim 6, wherein the circuit further comprises a plurality of UV light sensor units, the UV light sensor unit is one of the plurality of UV light sensor units; and the light-emitting unit of each of the integrated light-emitting units has a corresponding relationship with a respective one of the plurality of UV light sensor units, and a plurality of target light powers are provided, each of which is for a respective one of the integrated light-emitting units;
the power supply unit comprises a plurality of power switch modules, and each of the power switch modules is connected to a respective one of the integrated light-emitting units;
each of the plurality of UV light sensor units is configured to collect and transmit the UV light power signal of a target light-emitting unit according to the corresponding relationship to the control unit to determine a plurality of light powers each corresponding to a respective one of the integrated light-emitting units; and
the power supply unit is further configured to adjust the current transmitted to each of the plurality of integrated light-emitting units through the respective one of the power switch modules until the respective light power is equal to the respective target light power for each of the integrated light-emitting units.

8. The multi-channel light-emitting diode constant-current-and-light power driving circuit according to any one of claims 1 to 7, wherein the power transistor unit comprises a power transistor module and a negative feedback adjustment module;
a first end of the power transistor module is connected to the light-emitting unit, a second end of the power transistor module is connected to a second input end of the negative feedback adjustment module, and a third end of the power transistor module is connected to an output end of the negative feedback adjustment module; and
a first input end of the negative feedback adjustment module is connected to a first control signal output end of the control unit.

9. The multi-channel light-emitting diode constant-current-and-light power driving circuit according to claim 8, wherein the power transistor module comprises a power transistor, a first resistor, a second resistor and a third resistor;
a first end of the power transistor is served as the first end of the power transistor module, a second end of the power transistor is served as the second end of the power transistor module, and a third end of the power transistor is served as the third end of the power transistor module;
an end of the first resistor is connected to the first end of the power transistor, and the other end of the first resistor is connected to a first sampling signal input end of the control unit;
an end of the second resistor is connected to the other end of the first resistor, and the other end of the second resistor is connected to a negative output end of the power supply unit; and
an end of the third resistor is connected to the second end of the power transistor, and the other end of the third resistor is connected to the negative output end of the power supply unit.

10. The multi-channel light-emitting diode constant-current-and-light power driving circuit according to any one of claims 1 to 7, wherein a sampling signal output end of the power supply unit is connected to a second sampling signal input end of the control unit, and a control signal input end of the power supply unit is connected to a second control signal output end of the control unit; and
the control unit is configured to obtain a power supply sampling signal through the second sampling signal input end of the control unit, then generate a power supply control signal according to the power supply sampling signal, and transmit the power supply control signal to the power supply unit through the second control signal output end of the control unit.

11. An electronic device, comprising the multi-channel light-emitting diode constant-current-and-light power driving circuit according to any one of claims 1 to 10.
